# EUROPEAN PATENT APPLICATION

(11) **EP 2 784 899 A1**
(43) Date of publication of application: **01.10.2014**
(21) Application number: 12851383.5
(22) Date of filing: 19.11.2012
(51) Int. Cl.: H02J 7/00, B60L 11/18, H01M 10/44, H01M 10/48

(54) **POWER CONVERTER**

(30) Priority: 21.11.2011 JP 2011254362
(71) Applicant: Panasonic Corporation, Osaka 571-8501 (JP)
(72) Inventor: MASUDA, Takuya, Osaka-shi, Osaka 540-6207 (JP); KOBAYASHI, Susumu, Osaka-shi, Osaka 540-6207 (JP)
(74) Representative: Appelt, Christian W.
(86) International application number: PCT/JP2012/007404
(87) International publication number: WO 2013/076951

(57) **Abstract**

A EV charging and discharging converter which can be connected with a house and an electric vehicle comprises: a plurality of power converting parts to which a plurality of electric vehicles can be connected; and EV side switch part provided to the plurality of power converting part on a connection side with the electric vehicle to enable one or a plurality of power converting parts to be connected with the electric vehicle, wherein The EV side switch part switches the number of the power converting parts connected to the electric vehicle in response to the change in power conversion efficiency, which responds to connection relation between the electric vehicle and the power converting part, and to charging/discharging power of the electric vehicle.

## Description

### Technical Field

The present invention relates to a power converter which converts an electric power.

### Background Art

As a technique for sharing a charger (converter) by a plurality of electric vehicles by way of a branching unit (relay), one described in the below-mentioned Patent Document 1 has been known. In this Patent Document 1, an electric vehicle fast charging and discharging unit in an outdoor parking lot is described.

This electric vehicle fast charging and discharging unit is configured to allow a plurality of electric vehicles to be connected to one converter and one branching unit. This electric vehicle fast charging and discharging unit selects a branch electric power supply cable for supplying electric power to a charge operation device in a parking space where electric vehicles to be subject to fast charging are parked by way of the branching unit.

However, in the above-described electric vehicle fast charging and discharging unit, the charger that converts power from an AC source has a problem that conversion efficiency is lowered when charging or discharging is carried out in an area other than an optimum operation rea.

Therefore, the present invention has been made in consideration of the above-mentioned situation and aims at providing a power converter which can carry out charging and discharging of an electric vehicle with an optimum power conversion efficiency.

### Prior Art Document

### Patent Document

Patent Document 1: Japanese Utility Model No. 3165170

### Summary of Invention

A power converter according to a first embodiment is a power converter which can be connected with an arbitrary power charging and discharging unit and an electric vehicle and includes a plurality of power converting parts to which a plurality of electric vehicles can be connected and a first switch part provided to the plurality of power converting parts on a connection side with the electric vehicle to enable one or the plurality of power converting parts to be connected with the electric vehicle, wherein the first switch part switches the number of the power converting part connected to the electric vehicle in response to the change in power conversion efficiency, which responds to connection relation between the electric vehicle and the power converting part, and to charging/discharging power of the electric vehicle.

A power converter according to a second embodiment, which is also the power converter according to the first embodiment, is characterized by switching the number of the power converting part to be connected to a first electric vehicle in response to the charging/discharging power of the first electric vehicle and connecting a power converting part which is not connected to the first electric vehicle to a second electric vehicle.

A power converter according to a third embodiment, which is also the power converter according to the first embodiment, is characterized by including a second switch part provided to the plurality of power converting parts on the connection side with the arbitrary charging and discharging unit, wherein the second switch part switches one or the plurality of power converting parts to be connected to one or a plurality of arbitrary charging and discharging units.

A power converter according to a fourth embodiment, which is also the power converter according to the first embodiment, is characterized by including a third switch part provided between the plurality of power converting parts, wherein the third switch part switches so that a first power converting part, to which one or a plurality of electric vehicles have been connected, and a second power converting part, to which one or a plurality of electric vehicles that have not been connected with the first power converting part have been connected, are connected.

A power converter according to a fifth embodiment, which is also the power converter according to the first embodiment, is characterized by the first switch part which switches the number of the power converting part to be connected to the electric vehicle depending on the remaining power level of a secondary cell used for the electric vehicle.

A power converter according to a fifth embodiment, which is also the power converter according to the first embodiment, is characterized by the first switch part which switches the number of the power converting parts to be connected to the electric vehicles depending on power supply capability of the arbitrary charging/discharging unit which responds to the amount of power the charging/discharging unit can supply to the electric vehicle or power receiving capability of the arbitrary charging/discharging unit which responds to the amount of power the charging/discharging unit can receive from the electric vehicle.

### Brief Description of the Drawings

[Fig. 1] Fig. 1 is a block diagram showing a configuration of an EV charging and discharging converter shown as an embodiment of the present invention.
[Fig. 2] Fig. 2 is a view showing relationship between charging/discharging power and power conversion efficiency when charging or discharging is carried out by a single power conversion unit in the EV charging and discharging converter shown as an embodiment of the present invention.
[Fig. 3] Fig. 3 is a view showing relationship between charging/discharging power and power conversion efficiency when charging or discharging is carried out by two power conversion units in the EV charging and discharging converter shown as an embodiment of the present invention.
[Fig. 4] Fig. 4 is a view showing relationship between charging/discharging power and power conversion efficiency when charging or discharging is carried out by three power conversion units in the EV charging and discharging converter shown as an embodiment of the present invention.
[Fig. 5] Fig. 5 is a view showing relationship between elapsed time since the beginning of charging/discharging of an electric vehicle and charging/discharging power in the EV charging and discharging converter shown as an embodiment of the present invention.
[Fig. 6] Fig. 6 is a block diagram showing an operation example of the EV charging and discharging converter shown as an embodiment of the present invention in a case where a plurality of electric vehicles are connected to the EV charging and discharging converter.
[Fig. 7] Fig. 7 is a block diagram showing a configuration of an EV charging and discharging converter as a comparative example.
[Fig. 8] Fig. 8 is a view showing relationship between charging/discharging power and power conversion efficiency in the EV charging and discharging converter as a comparative example.
[Fig. 9] Fig. 9 is a view showing relationship between elapsed time since the beginning of charging/discharging of an electric vehicle and charging/discharging power in the EV charging and discharging converter as a comparative example.
[Fig. 10] Fig. 10 is a block diagram showing an operation example of the EV charging and discharging converter as a comparative example.
[Fig. 11] Fig. 11 is a block diagram showing another configuration example of an EV charging and discharging converter shown as an embodiment of the present invention.
[Fig. 12] Fig. 12 is a block diagram showing a configuration in which a switch is provided on a house side of a power conversion unit of the EV charging and discharging converter shown as an embodiment of the present invention.
[Fig. 13] Fig. 13 is a block diagram showing a configuration in which a relay for connecting electric conversion units is provided in the EV charging and discharging converter shown as an embodiment of the present invention.
[Fig. 14] Fig. 14 is a view showing remaining level or charging/discharging capability of a secondary cell and number of use of the power conversion unit in the EV charging and discharging converter shown as an embodiment of the present invention.

### Description of Embodiments

Hereinafter, embodiments of the present invention will be explained with reference to figures.

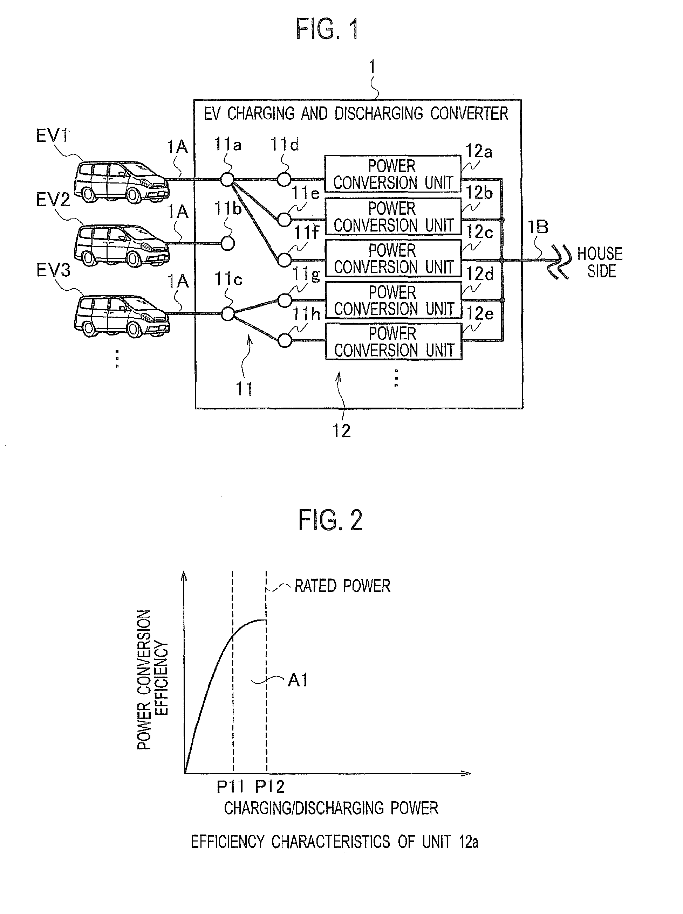

An electric vehicle (EV) charging and discharging converter 1 shown as an embodiment of a power converter according to the present invention is configured as shown in Fig. 1, for example. A plurality of electric vehicles EV1, EV2, EV3, ... (hereinafter, referred to as "electric vehicle EV" when collectively called) can be connected to the EV charging and discharging converter 1. Moreover, the EV charging and discharging converter 1 is connected to a house as an arbitrary charging and discharging unit. This house includes a distribution board for receiving power from an electric power system and distributing the power, power consuming machinery such as various home electronics, and a power generation unit such as a photovoltaic cell or a fuel cell. In addition, the arbitrary charging and discharging unit may be a charging device provided to various spots such as an electricity charging station or another vehicle. Note that in the following example, a case where a house is connected to the EV charging and discharging converter 1 as an arbitrary charging and discharging unit will be explained.

The EV charging and discharging converter 1 includes an EV side switch part (first switch part) 11 and a plurality of power conversion units (power converting part) 12 inside.

In the example of Fig. 1, the plurality of power conversion units 12 include five power conversion units 12a, 12b, 12c, 12d, and 12e. However, the plurality of power conversion units 12 may include more power conversion units. Note that when the power conversion unit is collectively called, it will be referred to simply as the "power conversion unit 12."

Each of the power conversion units 12 includes, for example, a built-in DC/DC unit or the like. Each of the power conversion units 12 is connected to one electric vehicle EV via the EV side switch part 11. Moreover, each of the power conversion units 12 can be connected to one electric vehicle EV together with another power conversion unit 12.

Electric power having a predetermined voltage is supplied to the power conversion unit 12 from the house. The power conversion unit 12 can convert the predetermined voltage of electric power from the house to a direct voltage for charging the electric vehicle EV. The power conversion unit 12 outputs the power thus converted through the EV side switch part 11 and an EV side power bus 1A.

Electric power having a predetermined voltage is supplied from a secondary cell mounted on the electric vehicle EV to the power conversion unit 12. The electric power conversion unit 12 can convert the predetermined voltage to a voltage for the house. The power conversion unit 12 outputs the power thus converted through a house side power bus 1B connected to the house. In this embodiment, the power conversion unit 12 can convert the electric power supplied from the electric vehicle EV to a direct voltage of, for example, 300 to 400V.

The EV side switch part 11 is configured to be enabled to connect the plurality of electric vehicles EV and the plurality of power conversion units 12. The EV side switch part 11 may be configured to automatically switch connection relation by a controller (not shown) or may be configured to switch connection relation by operation by a user. In the example shown in Fig. 1, a configuration by which three electric vehicles EV1, EV2 and EV3 and five power conversion units 12a, 12b, 12c, 12d and 12e can be connected by the EV side switch part 11 is shown. However, the configuration is not limited thereto.

The EV side switch part 11 includes a plurality of EV side terminals and a plurality of unit side terminals. The EV side terminals are provided for the number of the electric vehicles EV to be connected to the EV charging and discharging converter 1. The unit side terminals are provided for the number of the power conversion units 12 inside the EV charging and discharging converter 1. The EV side switch part 11 is configured to bring the EV side terminals and the unit side terminals into arbitrary connection relation.

In the example of Fig. 1, since there are three electric vehicles EV which can be connected to the EV side charging and discharging converter 1, three EV side terminals 11a, 11b and 11c are provided. Since there are five power conversion units 12, namely, 12a, 12b, 12c, 12d and 12e, five EV side terminals 11d, 11e, 11f, 11g and 11h are provided.

In the example of Fig. 1, a condition where the EV side switch part 11 connects the EV side terminal 11a with the unit side terminals 11d, 11e and 11f is shown. Moreover, in the example of Fig. 1, a condition where the EV side switch part 11 connects the EV side terminal 11c with the unit side terminals 11g and 11h is shown.

Such EV charging and discharging converter 1 is enabled to control the connection relation between the electric vehicle EV and the power conversion unit 12 so that power conversion efficiency of the entire power conversion unit 12 becomes high. Particularly, in the EV charging and discharging converter 1, the EV side switch part 11 switches the number of power conversion units 12 connected to the electric vehicle EV depending on the charging/discharging power of the electric vehicle EV.

In a case where a single power conversion unit 12 is connected with a single electric vehicle EV, power conversion efficiency of the charging/discharging power varies as shown in Fig. 2. This power conversion efficiency becomes high when the power conversion unit is operated while the charging/discharging power is between P11 and rated power P12. Therefore, this area becomes the optimum operation area A1 of the power conversion unit 12. The optimum operation area A1 is, for example, in the vicinity of the rated power and is a predetermined range lower than the rated power.

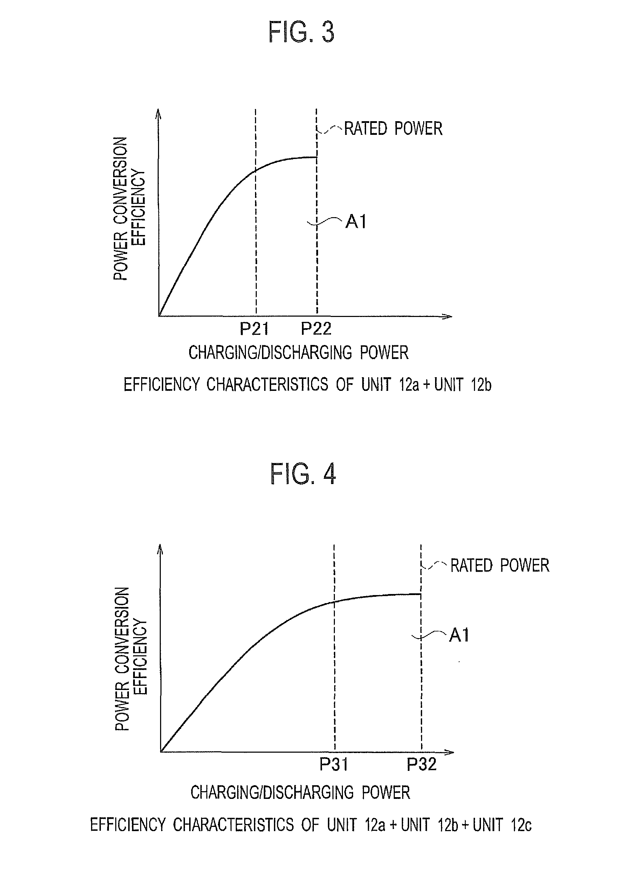

In a case where the power conversion unit 12a and the power conversion unit 12b are connected to a single electric vehicle EV, for example, power conversion efficiency varies as shown in Fig. 3. This power conversion efficiency becomes high when the power conversion units are operated while the charging/discharging power is between P21 and rated power P22. Therefore, it is desirable that the power conversion unit 12 including the power conversion unit 12a and the power conversion unit 12b is operated with the charging/discharging power in an optimum operation area A1 of between P21 and rated power P22.

In a case where the power conversion unit 12a, and the power conversion unit 12b and the power conversion unit 12c are connected to a single electric vehicle EV, for example, power conversion efficiency varies as shown in Fig. 4. This power conversion efficiency becomes high when the power conversion units are operated while the charging/discharging power is between P31 and rated power P32. Therefore, it is desirable that the power conversion unit 12 including the power conversion unit 12a, the power conversion unit 12b and the power conversion unit 12c is operated with the charging/discharging power in an optimum operation area A1 of between P31 and rated power P32.

If the number of power conversion units 12 connected to a single electric vehicle EV is increased, the charging/discharging power of the EV charging and discharging converter 1 in the optimum operation area A1 can be shifted to higher power side.

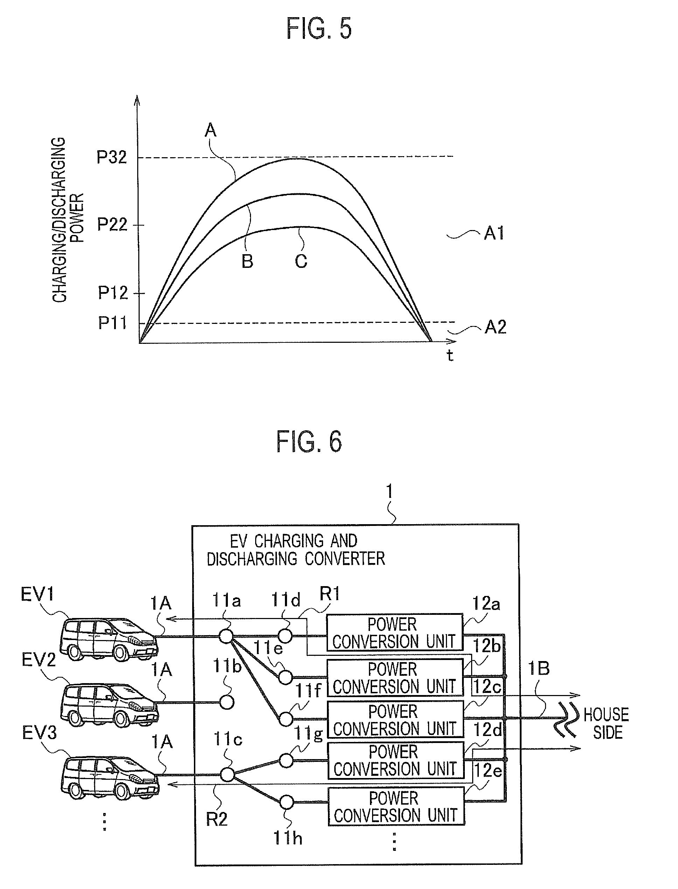

A range in which charging/discharging can be carried out in the optimum operation area A1 with the EV charging and discharging converter 1 can become larger by adjusting the number of the power conversion units 12 to be connected to the electric vehicle EV, as shown in Fig. 2 to 4. For example, in a case where three power conversion units 12 can be connected to a single electric vehicle EV, as shown in Fig. 5, charging and discharging can be carried out with a high power conversion efficiency in an area A1 excluding an area A2 which is not included in a large optimum operation area A1 of the converter from the charging/discharging power P11 shown in Fig. 2 to the rated power shown in Fig. 4.

Characteristics A, B and C shown in Fig. 5 show variation in the charging/discharging power due to time elapsed since the beginning of charging/discharging. The reason why variation range of the charging/discharging power fluctuates between the characteristics A, B and C is that there are differences in the types and condition of the electric vehicle EV.

In a case where the charging/discharging power varies as in, for example, the characteristics A, the EV charging and discharging converter 1 can connect the three power conversion units 12a, 12b and 12c to the electric vehicle EV. In an early stage of charging/discharging where charging/discharging power is low, only the power conversion unit 12a is connected to the electric vehicle EV and when the charging/discharging power gradually becomes larger, number of power conversion units to be connected to the electric vehicle is increased to two power conversion units of 12a and 12b or to three power conversion units of 12a, 12b and 12c. Subsequently, when the charging/discharging power becomes lower, the number of the power conversion units is reduced from three to two and in the vicinity of the final stage of charging/discharging, the number is reduced to one. Thus, the EV charging and discharging converter 1 can carry out charging/discharging with a high power conversion efficiency from the beginning to the end of the charging/discharging to the electric vehicle EV even if charging/discharging characteristics significantly fluctuate as in the characteristics A.

In a case where charging/discharging characteristics fluctuate as in, for example, the characteristics C, the EV charging and discharging converter 1 may allow two power conversion units 12a and 12b to be connected to the electric vehicle EV. In an early stage of charging/discharging where charging/discharging power is low, only the power conversion unit 12a is connected to the electric vehicle EV and when the charging/discharging power gradually becomes larger, number of power conversion units to be connected to the electric vehicle is increased to two power conversion units of 12a and 12b. Subsequently, when the charging/discharging power becomes lower, the number of the power conversion units is reduced from two to one. Thus, the EV charging and discharging converter 1 can carry out charging/discharging with a high power conversion efficiency from the beginning to the end of the charging/discharging to the electric vehicle EV even if charging/discharging characteristics fluctuate as in the characteristics C.

Note that in a case where the charging/discharging power fluctuates only between P11 and P12 from the beginning to the end of charging/discharging, the electric vehicle EV may be connected with the house through one power conversion unit 12a. At this time, the EV side switch part 11 connects the EV side terminal 11a with the unit side terminal 11d.

As described above, according to the EV charging and discharging converter 1, number of the power conversion units 12 to be connected to the electric vehicle EV can be switched by the EV side switch part 11 depending on the charging/discharging power of the electric vehicle EV. Thus, according to the EV charging and discharging converter 1, it becomes possible to carry out charging/discharging of the electric vehicle EV with the optimum power conversion efficiency even if the necessary charging/discharging power fluctuates. Moreover, according to the EV charging and discharging converter 1, it becomes possible to maintain operation in the optimum operation area irrespective of the amount of charging/discharging power and to improve overall power conversion efficiency from the beginning to the end of charging/discharging.

In addition, the EV charging and discharging converter 1 switches the number of the power conversion units 12 depending on the charging/discharging power of the electric vehicle EV (first electric vehicle) and can allow the power conversion units 12 which are not connected to the electric vehicle EV to be connected to another electric vehicle EV (second vehicle). Thus, the EV charging and discharging converter 1 can carry out charging/discharging to a plurality of electric vehicles EV with the optimum power conversion efficiency even in a case where the plurality of electric vehicles EV are connected to the converter.

Specifically, in a case where charging and discharging operation by the electric vehicle EV1 fluctuates as the characteristics A in Fig. 5, the EV side switch part 11 allows three power conversion units 12a, 12b and 12c to be connected to the electric vehicle EV1 as shown in Fig. 6. Thus, the EV charging and discharging converter 1 can carry out charging/discharging to the electric vehicle EV1 by use of a route R1.

On the other hand, in a case where charging/discharging power of the electric vehicle EV2 fluctuates as the characteristics C, the EV side switch part 11 can allow the remaining power conversion units 12d and 12e to be connected. Thus, the EV charging and discharging converter 1 can carry out charging/discharging to the electric vehicle EV 1 by use of a route 2.

As described above, the EV charging and discharging converter 1 allocates unused power conversion unit 12 to another electric vehicle EV so that simultaneous charging/discharging of a plurality of vehicles can be carried out. Therefore, the EV charging and discharging converter 1 can improve utilization efficiency of the EV charging and discharging converter 1.

Next, a comparative example to the present embodiment will be explained.

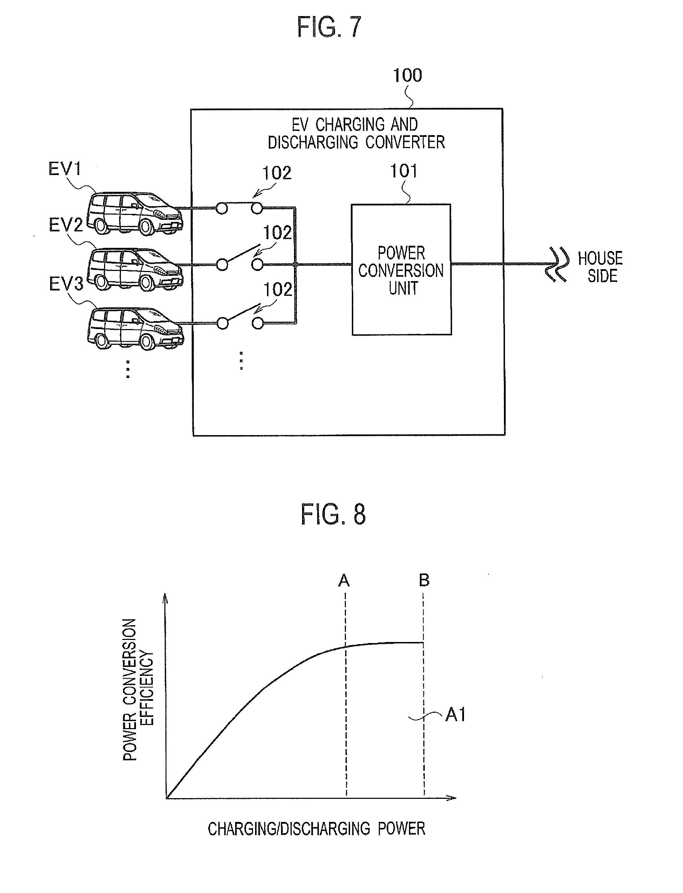

An EV charging and discharging converter 100 of the comparative example includes a single power conversion unit 101 and EV side switch parts 102, as shown in Fig. 7. Each of the EV side switch parts 102 of the EV charging and discharging converter 100 can be opened and closed.

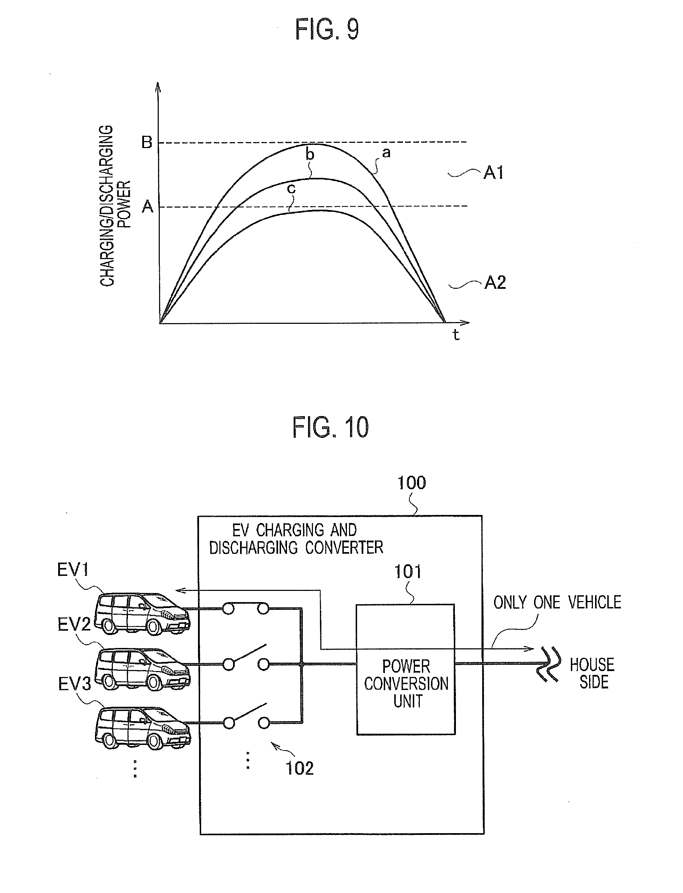

An area where charging/discharging power of the EV charging and discharging converter 100 is constant between A and B, as shown in Fig. 8, is an optimum operation area A1. If the charging/discharging power significantly fluctuates due to the type or condition of a vehicle or the like from the beginning to the end of charging/discharging, as shown in Fig. 9, time during which charging/discharging is carried out in an area A2, which is out of the optimum operation area A1 with charging/discharging power A to B, becomes long. Therefore, even if power conversion efficiency of the EV charging and discharging converter 100 as a comparative example to the electric vehicle EV is high in its peak, charging/discharging efficiency is lowered in total charging/discharging time. Moreover, the EV charging and discharging converter 100 as a comparative example can charge/discharge only one electric vehicle EV at a time, as shown in Fig. 10.

Contrary to this, according to the EV charging and discharging converter 1 shown as the present embodiment, it becomes possible to carry out charging/discharging with an optimum power conversion efficiency even if necessary charging/discharging power fluctuates. Moreover, according to the EV charging and discharging converter 1 shown as the present embodiment, it becomes possible to carry out charging/discharging to electric vehicles EV with an optimum power conversion efficiency even in a case where a plurality of electric vehicles EV are connected.

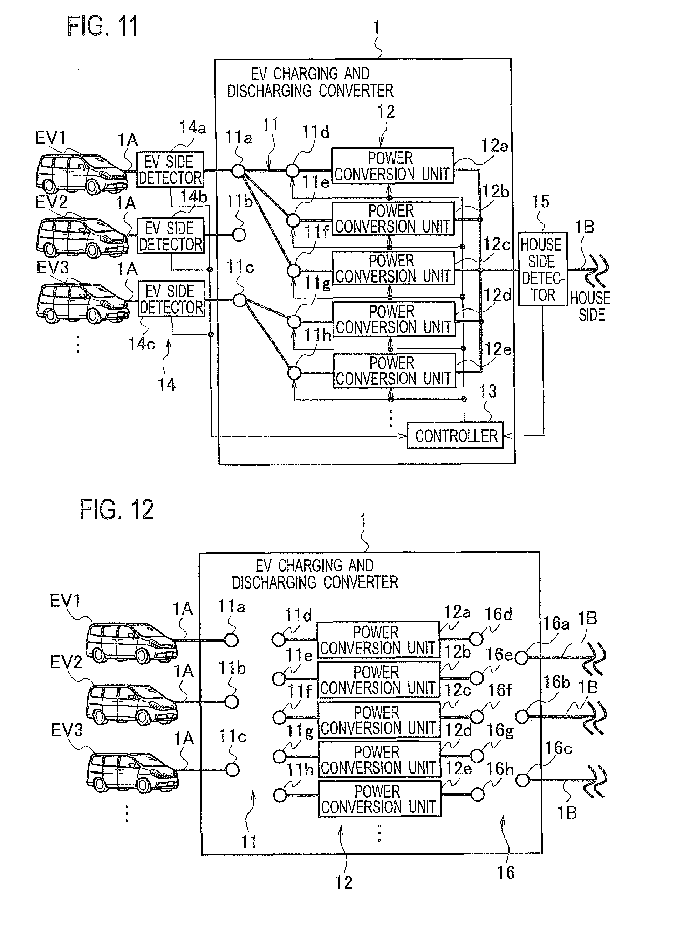

Next, a configuration by which the EV side switch part 11 in the above-described EV charging and discharging converter 1 is automatically controlled will be explained with reference to Fig. 11.

This EV charging and discharging converter 1 includes the EV side switch part 11 and a controller 13 connected with the power conversion unit 12. Moreover, an EV side detector 14 is provided to each of EV side power bus 1A of the EV charging and discharging converter 1. A house side detector 15 is provided to the house side power bus 1B of the EV charging and discharging converter 1.

The EV side detector 14 is provided to each of the EV side power bus 1A. The EV side detector 14 detects input/output power inputted or outputted between the EV charging and discharging converter 1 and the electric vehicle EV via the EV side power bus 1A. In response to three EV side power buses 1A provided in the configuration example of Fig. 1, three EV side detectors 14a, 14b and 14c are provided to each of the EV side power bus 1A.

The house side detector 15 is provided to the house side power bus 1B. The house side detector 15 detects input/output power inputted or outputted between the EV charging and discharging converter 1 and an arbitrary charging and discharging device such as the house via the house side power bus 1B. In the configuration example of Fig. 1, only one house side detector 15 is provided in response to provision of one house side power bus 1B.

The controller 13 acquires input/output power detected by the EV side detector 14 and input/output power detected by the house side detector 15. The controller 13 controls on/off of the EV side switch part 11 and on/off of the house side switch part 12. The controller 13 carries out control to switch the number of the power conversion unit 12 to be connected to the electric vehicle EV depending on the charging/discharging power (input/output power) of the electric vehicle EV.

Specifically, it is assumed that the electric vehicle EV is connected and the controller 13 judges on the basis of input/output power detected by the EV side detector 14 that three power conversion units 12 need to be connected. At this time, the controller 13 carries out control to activate the power conversion units 12a, 12b and 12c and to connect them with the EV side terminal 11a and the unit side terminals 11d, 11e and 11f. Thus, the controller 13 is configured to cause the power conversion unit 12 to carry out power conversion operation in the optimum operation area A1 within a range where charging/discharging power when the electric vehicle EV charges or discharges fluctuates.

Moreover, the controller 13 switches the number of the power conversion units 12 to be connected to the electric vehicle EV depending on the charging/discharging power of the electric vehicle EV and can connect the power conversion unit 12, which has not been connected to the electric vehicle EV1, to an electric vehicle EV3. Specifically, in a case where the electric vehicle EV3 is newly connected to the EV charging and discharging converter 1, the controller 13 carries out control to activate the power conversion units 12d and 12e and connect them with the EV side terminal 11 and the unit side terminals 11g and 11h.

Such EV charging and discharging converter 1 can automatically control the number of the power conversion units 12 for the electric vehicles EV by the controller 13 based on the charging/discharging power. Thus, it becomes possible to carry out charging/discharging of the electric vehicle EV with the optimum power conversion efficiency even if necessary charging/discharging power fluctuates. Moreover, even in a case where a plurality of electric vehicles EV are connected, it becomes possible to carry out charging/discharging of the plurality of electric vehicles EV with the optimum power conversion efficiency.

Next, the EV charging and discharging converter 1 having another configuration will be explained. This EV charging and discharging converter 1 includes a house side switch part (second switch part) 16 provided on the connection side of the house as an arbitrary charging and discharging device for a plurality of power conversion units 12, as shown in Fig. 12.

The house side switch part 16 can cause a plurality of house side power buses 1B an electric vehicle EV and the plurality of power conversion units 12 to be connected. The house side switch part 16 may automatically switch connection relation by a controller (not shown) or may manually switch the connection relation through operation by a user. In the example of Fig. 12, a configuration of the house side switch part 16 which can connect three house side power buses 1B and five power conversion units 12a, 12b, 12c, 12d and 12e is shown. However, the present invention is not limited to this configuration.

The house side switch part 16 includes a plurality of house side terminals and a plurality of unit side terminals. The house side terminals are provided for the number of the house side power buses 1B to be connected with the EV charging and discharging converter 1. The unit side terminals are provided for the number of the power conversion unit 12 inside the EV charging and discharging converter 1. The house side switch part 16 is configured to cause the house side terminal and the unit side terminal to be in an arbitrary connection relation.

In the example of Fig. 12, since there are three house side power buses 1B connected to the EV charging and discharging converter 1, there are three house side terminals 16a, 16b and 16c. Since there are five power conversion units 12, namely 12a, 12b, 12c, 12d and 12e, incorporated in the EV charging and discharging converter 1, there are five EV side terminals 16d, 16e, 16f, 16g and 16h.

The house side switch part 16 of such EV charging and discharging converter 1 can switch to allow one or a plurality of power conversion units 12 to be connected to one or a plurality of house side power buses 1B. Thus, the EV charging and discharging converter 1 can switch the number of the power conversion unit 12 in response to the charging/discharging power inputted or outputted between the EV charging and discharging converter 1 and the house side.

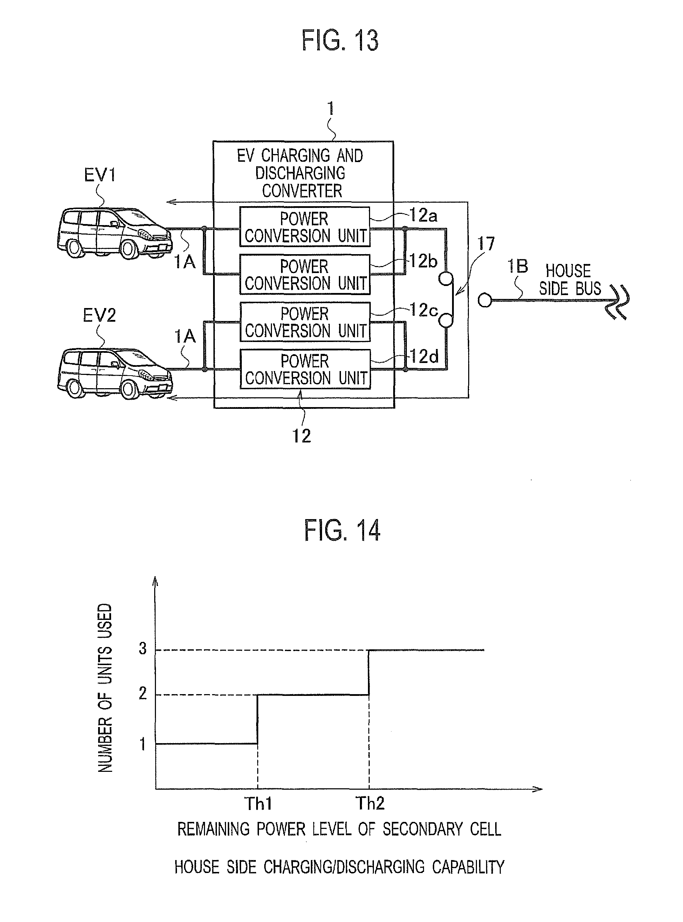

In addition, another EV charging and discharging converter 1 may have a relay (third switch part) 17 provided between a plurality of power conversion units, as shown in Fig. 13.

The relay 17 switches so that a power conversion unit 12 (a first power converting part) to which an electric vehicle EV is connected and a power conversion unit 12 (a second power converting), to which an electric vehicle EV, which has not been connected to the former power conversion unit 12, is connected, are connected. Moreover, the relay 17 may be configured to allow one or a plurality of power conversion units 12 and one or a plurality of power conversion units 12 to be connected. Note that the relay 17 may be configured to automatically switch connection relation by a controller (not shown) or to manually switch connection relation by a user.

In the example of Fig. 13, one end of the relay 17 is connected with the power conversion unit 12a and the power conversion unit 12b. The other end of the relay 17 is connected with the power conversion unit 12c and the power conversion unit 12d. When this relay 17 is turned on, the electric vehicle EV1 and the electric vehicle EV2 can be connected via the power conversion units 12a, 12b, 12c and 12d.

According to such EV charging and discharging converter 1, it becomes possible to charge/discharge between an electric vehicle EV and an electric vehicle EV, in addition to the above-described effects.

Furthermore, the above-described EV charging and discharging converter 1 switched the number of the power conversion unit 12 on the basis of the charging/discharging power. However, the other indicator may be used.

The EV charging and discharging converter 1 may turn the EV side switch part 11 in response to the remaining power level of a secondary cell used for an electric vehicle EV. With this EV charging and discharging converter 1, a user may confirm the remaining power level of the secondary cell of the electric vehicle EV and switch the EV side switch part 11 to change the number of power conversion unit 12 to be connected. Moreover, the EV charging and discharging converter 1 may detect the remaining power level of the secondary cell of the electric vehicle EV and control the EV side switch part 11 and the power conversion unit 12 by use of the controller 13 so that number of the power conversion unit 12 to be connected is changed.

In addition, the EV charging and discharging converter 1 may switch the number of the power conversion unit 12 to be connected to the electric vehicle EV depending on the charging/discharging capability of the house. The charging/discharging capability includes both power receiving capability and power supply capability of the house. Power supply capability is the power supply capability as an arbitrary charging and discharging device corresponding to the amount of power that the house can supply to the electric vehicle EV. Power receiving capability is the power receiving capability as an arbitrary charging and discharging device corresponding to the amount of power that the house can receive from the electric vehicle EV.

Such EV charging and discharging converter 1 sets the remaining power level of the secondary cell or the number of the power conversion unit 12 to be used in response to the charging/discharging capability. As shown in Fig. 14, for example. Thus, the EV charging and discharging converter 1 can cause more power conversion units 12 to be connected to the electric vehicle EV when the remaining power level of the secondary cell or charging/discharging capability is high.

Here, higher secondary cell of the electric vehicle EV leads to higher charging/discharging power supplied to the EV charging and discharging converter 1. Moreover, higher charging/discharging capability of the house leads to higher charging/discharging power supplied to the EV charging and discharging converter 1. Therefore, the EV charging and discharging converter 1

Thus, the EV charging and discharging converter 1 can cause more power conversion units 12 to be connected to the electric vehicle EV when the remaining power level of the secondary cell or charging/discharging capability is high.

As described above, the EV charging and discharging converter 1 can control the number of the power conversion unit 12 based on an indicator that predicts fluctuation of charging/discharging power when the electric vehicle EV charges or discharges. Thus, it becomes possible to carry out charging or discharging of the electric vehicle EV with an optimum power conversion efficiency.

The electric vehicle EV is not limited to an electric vehicle and may be any vehicle that can supply or receive power. The electric vehicle EV may be, for example, a plug-in hybrid electric vehicle (PHEV) or a fuel cell vehicle.

Note that the above-described embodiment is an example of the present invention. Therefore, it is needless to say that the present invention is not limited to the above-described embodiment and any modification other than the embodiment can be made depending on the design or the like within the scope of technical idea according to the invention.

Entire content of the Japanese Patent Application No. 2011-254362 (date of application: November 21, 2011) is incorporated herein.

### Industrial Applicability

According to the present invention, number of power converting part to be connected to an electric vehicle is switched depending on the charging/discharging power of the electric vehicle. Therefore, it becomes possible to carry out charging or discharging of the electric vehicle with an optimum power conversion efficiency even if charging/discharging power of the electric vehicle fluctuates.

### Explanation of References

- EV1 to EV3: Electric vehicle
- 1: EV charging and discharging converter (power converter)
- 12: Power conversion unit (power converting part)
- 11: EV side switch part (first switch part)
- 16: House side switch part (second switch part)
- 17: Relay (third switch part)

## Claims

1. A power converter which can be connected with an arbitrary power charging and discharging unit and an electric vehicle, comprising:
a plurality of power converting parts to which a plurality of electric vehicles can be connected; and
a first switch part provided to the plurality of power converting part on a connection side with the electric vehicle to enable one or a plurality of power converting parts to be connected with the electric vehicle, wherein
the first switch part switches the number of the power converting parts connected to the electric vehicle in response to the change in power conversion efficiency, which responds to connection relation between the electric vehicle and the power converting part, and to charging/discharging power of the electric vehicle.

2. The power converter according to claim 1, wherein the number of the power converting part to be connected to a first electric vehicle is switched in response to the charging/discharging power of the first electric vehicle and a power converting part, which has not been connected to the first electric vehicle, is connected to a second electric vehicle.

3. The power converter according to claim 1 comprising a second switch part provided to the plurality of power converting parts on the connection side with the arbitrary charging and discharging unit, wherein
the second switch part switches to cause one or the plurality of power converting parts to be connected to one or a plurality of arbitrary charging and discharging units.

4. The power converter according to claim 1 comprising a third switch part provided between the plurality of power converting parts, wherein
the third switch part switches to cause a first power converting part to which one or a plurality of electric vehicles have been connected and a second power converting part to which one or a plurality of electric vehicles, which has not been connected to the first power converting part, have been connected to be connected.

5. The power converter according to claim 1 wherein the first switch part switches the number of the power converting parts to be connected to the electric vehicle depending on the remaining power level of a secondary cell used for the electric vehicle.

6. The power converter according to claim 1 wherein the first switch part switches the number of the power converting part to be connected to the electric vehicles in response to power supply capability of the arbitrary charging/discharging unit which responds to the amount of power the charging/discharging unit can supply to the electric vehicle or to power receiving capability of the arbitrary charging/discharging unit which responds to the amount of power the charging/discharging unit can receive from the electric vehicle.
